# EUROPÄISCHE PATENTSCHRIFT

(11) **EP 1 020 656 B1**
(45) Veröffentlichungstag und Bekanntmachung des Hinweises auf die Patenterteilung: **26.07.2006**
(21) Anmeldenummer: 99121209.3
(22) Anmeldetag: 23.10.1999
(51) Int. Cl.: F16D 55/224, F16D 55/226, F16D 65/092

(54) **Verfahren zum Herstellen eines Gehäuses sowie Teilbelag-Scheibenbrembse mit solch einem Gehäuse**
Method for manufacturing a housing and partly lined disc brake comprising such a housing
Méthode de fabrication d'un boîtier et frein à disque à garnitures partielles avec un tel boîtier

(30) Priorität: 18.01.1999 DE 19901690
(43) Veröffentlichungstag der Anmeldung: 19.07.2000
(73) Patentinhaber: Continental Teves AG & Co. oHG, 60488 Frankfurt (DE)
(72) Erfinder: Weiler, Rolf, 65817 Eppstein (DE)

(56) Entgegenhaltungen:
- EP-A- 0 341 610
- EP-A- 0 826 894
- DE-A- 19 719 640

## Beschreibung

Die vorliegende Erfindung betrifft ein Verfahren zum Herstellen eines Gehäuses für eine Schwimmsattel-Teilbelag-Scheibenbremse mit einer Gehäusebrücke, einer Nut und einer Anlagefläche für einen mittels einer aus einem Kolben und einem Zylinder bestehenden Betätigungseinheit via die Gehäusebrücke gegen eine Bremsscheibe drückbaren Bremsbelag, sowie eine Schwimmsattel-Teilbelag-Scheibenbremse mit solch einem Gehäuse.

Schwimmsattel-Teilbelag-Scheibenbremsen sind im Stand der Technik gut bekannt. Hinsichtlich ihres Aufbaus wird beispielhaft auf die EP 0 341 610 B1 verwiesen. Die darin beschriebene Teilbelag-Scheibenbremse weist einen fahrzeugfesten Bremsträger auf, an dem ein eine Bremsscheibe sowie beiderseits der Bremsscheibe angeordnete Bremsbeläge übergreifendes sattelförmiges Bremsgehäuse verschiebbar gelagert ist. Zur Bremsbetätigung enthält das Bremsgehäuse zumindest eine Betätigungsvorrichtung, die einen Bremszylinder und einen zugehörigen Kolben umfasst.

Die bekannten Schwimmsattel-Teilbelag-Scheibenbremsen haben sich durchaus bewährt, werden jedoch bislang kostenaufwendig hergestellt, wobei insbesondere das sattelförmige Gehäuse durch eine Vielzahl von unterschiedlichen Bearbeitungsschritten mit zum Teil unterschiedlichen Bearbeitungsrichtungen erstellt wird.

Aufgabe der vorliegenden Erfindung ist es daher, die Herstellung eines Gehäuses für eine Schwimmsattel-Teilbelag-Scheibenbremse fertigungstechnisch zu optimieren, um die Herstellungskosten für eine Schwimmsattel-Teilbelag-Scheibenbremse zu reduzieren.

Diese Aufgabe wird erfindungsgemäß dadurch gelöst, daß die Nut und die Anlagefläche auf der dem Kolben abgewandten Faustseite des Gehäuses durch Bearbeitung des Gehäuses ausschließlich konzentrisch zur Achse des Zylinders nur mittels Dreh- und/oder Bohroperationen ausgebildet werden.

Bevorzugt ist dabei erfindungsgemäß, daß die Nut zum mittigen Abstützen des Gehäuses auf einer Trägerplatte des Bremsbelags und die Anlagefläche des Gehäuses für den Bremsbelag auf der Faustseite in einem Bearbeitungsgang erzeugt werden.

Ferner kann gemäß der Erfindung vorgesehen sein, daß die Anlagefläche auf der Faustseite in im wesentlichen der gleichen Größe wie die auf der Seite des Kolbens hergestellt wird.

Ein Ausführungsbeispiel der Erfindung ist dadurch gekennzeichnet, daß in das Gehäuse parallel zur Achse des Zylinders eine Entlüftungsbohrung und ein Schlauchanschluß eingearbeitet werden.

Ferner ist es die Aufgabe der vorliegenden Erfindung, eine funktionsoptimierte, kostengünstige Schwimmsattel-Teilbelag-Scheibenbremse zu liefern.

Diese Aufgabe wird dadurch erfüllt, daß ein erfindungsgemäß hergestelltes Gehäuse in die Schwimmsattel-Teilbelag-Scheibenbremse eingebaut ist.

Eine erfindungsgemäß weiterentwickelte Schwimmsattel-Teilbelag-Scheibenbremse ist gekennzeichnet durch eine Bremsbelag-Trägerplatte, die einseitig mit einer Schulter und einem mit der Schulter über eine Schräge verbundenen Aushebezahn zur Aufnahme eines Endes eines Bremsträgers zwischen der Schulter und dem Aushebezahn ausgeformt ist, so daß bei Bewegung der Bremsbelag-Trägerplatte relativ zum feststehenden Bremsträger ein Gleiten entlang der Schräge von der eine erste Anlagefläche für den Bremsträger darbietenden Schulter zu dem eine zweite Anlagefläche für den Bremsträger darbietenden Aushebezahn stattfindet.

Der Erfindung liegt somit die überraschende Erkenntnis zugrunde, daß das sattelförmige Gehäuse einer Schwimmsattel-Teilbelag-Scheibenbremse, insbesondere für die Hinterachse eines Kraftfahrzeuges, nur durch Dreh- und/oder Bohroperation, also ohne Räumen und Fräsen, hergestellt werden kann, wobei die Bearbeitung ausschließlich konzentrisch zur Achse des Kolbens zum Erstellen der faustseitigen Nut sowie Anlagefläche, vorzugsweise in einem Bearbeitungsgang, ohne Wechsel der Bearbeitungsrichtung, erfolgt. Dabei soll die erfindungsgemäß erstellte Anlagefläche im wesentlichen auch von gleicher Größe wie die Anlagefläche auf der Kolbenseite sein.

Aus Kostengründen soll ferner ein Schlauchanschluß und eine Entlüftungsbohrung axial, also ebenfalls parallel zur Achse des Kolbens, in das Gehäuse eingebracht werden.

Das erfindungsgemäß hergestellte, sattelförmige Gehäuse kann grundsätzlich sowohl bei verschraubten als auch bei in den Achsschenkel integrierten Bremshaltern ausgeführt sein, wobei bei der integrierten Lösung vornehmlich aus Kostengründen nur eine sogenannte "Push"-Belagabstützungs-Wirkung vorgesehen ist.

Weitere Merkmale und Vorteile der Erfindung ergeben sich aus der nachfolgenden Beschreibung, in der Ausführungsbeispiele der Erfindung anhand von schematischen Zeichnungen im einzelnen erläutert sind. Dabei zeigt:
- Figur 1: eine erfindungsgemäße Schwimmsattel-Teilbelag-Scheibenbremse in Teilschnittfrontansicht;
- Figur 2a: eine andere, erfingungsgemäße Schwimmsattel-Teilbelag-Scheibenbremse in Teilschnittfrontansicht;
- Figur 2b: eine Teilschnittdraufsicht auf die Schwimmsattel-Teilbelag-Scheibenbremse von Figur 2a;
- Figur 3a: ein erfindungsgemäß hergestelltes Gehäuse in Frontansicht;
- Figur 3b: eine Schnittansicht entlag der Linie B-B von Figur 3a; und
- Figur 4: eine Teilschnittansicht einer mit Bremsträgern in stehenden Bremsbelag-Trägerplatte.

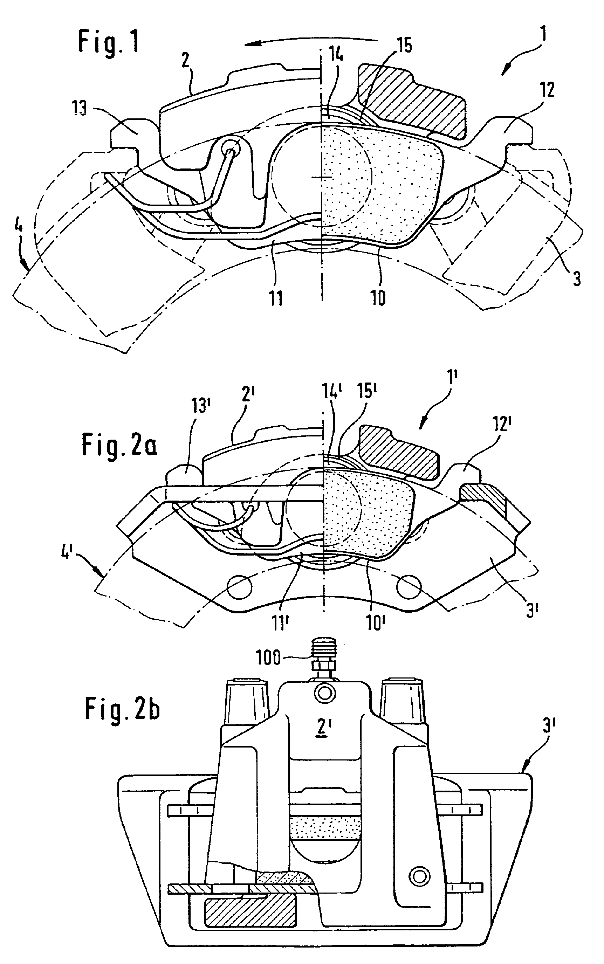

Figur 1 zeigt eine Schwimmsattel-Teilbelag-Scheibenbremse 1 mit einem sattelförmigen Gehäuse 2 und einem Bremsträger 3. Das Gehäuse 2 umgreift eine Bremsscheibe 4 U-förmig und ist an dem Bremsträger 3 axial gleitend unter einer Federspannung gelagert. Ferner steht das Gehäuse 2 mit einer Betätigungseinheit aus einem Kolben 14 und einem Zylinder 15 mit beiderseits der Bremsscheibe 4 angeordneten Bremsbelägen 10, 11 derart in Wirkverbindung, daß die Betätigungseinheit direkt einen ersten Bremsbelag 10 axial verschiebt und dabei gegen die Bremsscheibe 4 drückt, während gleichzeitig durch eine Reaktionskraft über das Gehäuse 2 ein zweiter Bremsbelag 11 indirekt gegen die Bremsscheibe 4 gedrückt wird. Die beiden Bremsbeläge 10, 11, jeweils auf einer Trägerplatte 12, 13 angebracht, sind zu diesem Zweck axial verschiebbar an die Bremsscheibe axial überragenden Tragarmen des Bremsträgers 3 geführt.

Die Schwimmsattel-Teilbelag-Scheibenbremse 1' gemäß Figur 2a unterscheidet sich von der gemäß Figur 1 lediglich hinsichtlich der Verankerung des Bremsträgers 3' am nicht gezeigten Achsschenkel, auf die hier nicht weiter eingegangen wird. Daher sind gleiche Teile mit gleichen Bezugszeichen mit hinzufügtem Apostroph gekennzeichnet. Ferner ist in Figur 2b noch eine axiale Entlüftungsbohrung 100 dargestellt.

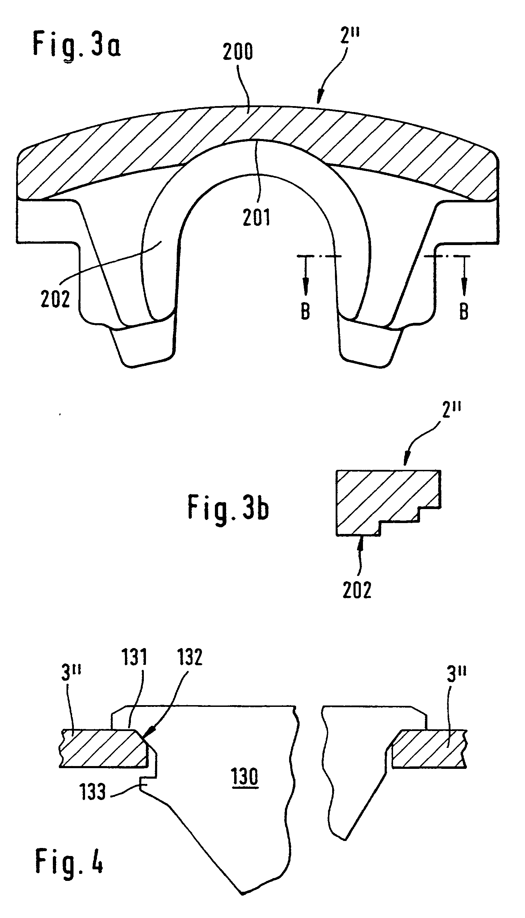

Den Figuren 3a und 3b ist das erfindungsgemäße Herstellungsverfahren für ein Gehäuse 2'' einer Schwimmsattel-Teilbelag-Scheibenbremse, wie sie in den Figuren la bis 2b dargestellt ist, zu entnehmen. Demnach umfaßt das Gehäuse 2'' eine Gehausebrucke 200 insbesondere zur Übertragung der axialen Zuspannkräfte bei Bremsbetätigung , eine Nut 201 zur mittigen Abstützung des Gehäuses 2'' auf einer Trägerplatte und eine faustseitige Anlagefläche 202 für einen Bremsbelag, wie bereits im Detail in der EP 0 341 610 B1 beschrieben, wobei erfindungsgemäß sowohl die Nut 201 als auch die Anlagefläche 202 in einem einzigen Bearbeitungsgang durch Drehen und/oder Bohren konzentrisch zur Achse des Zylinders ausgebildet werden.

In Figur 4 ist die axial verschiebbare Lagerung einer Bremsbelag-Trägerplatte 130 an einem Bremsträger 3'' dargestellt. Dabei weist die Bremsbelag-Trägerplatte 130 einseitig zusätzlich zu einer Schulter 131 eine Schräge 132 sowie einen Aushebezahn 133 auf. Wirkt nun, ausgehend von der in Figur 4 dargestellten Stellung, in der der Bremsträger 3'' in Kontakt mit der Schulter 131 steht, aufgrund eines Bremsvorgangs eine Umfangskraft auf die Bremsbelag-Trägerplatte 130, so wird sich diese in Umfangsrichtung verschieben, während der Bremsträger 3'' feststeht, so daß sich die Bremsbelag-Trägerplatte 130 entlang der Schräge 132 relativ zu dem Bremsträger 3'' bewegt, bis schließlich der Bremsträger 3'' an den Aushebezahn 133 anstößt, was ein Lösen der Verbindung zwischen der Bremsbelag-Trägerplatte 130 und dem Bremsträger 3'' zuverlässig verhindert. Der Bremsbelag kann damit zusammen mit dem Bremsgehäuse 2'' radial nicht auswandern bzw. sich vom feststehenden Bremsträger 3'' entfernen.

Das erfindungsgemäß hergestellte Gehäuse zeichnet sich durch fertigungsoptimierte Herstellung aus, was es ermöglicht, kostengünstig Schwimmsattel-Teilbelag-Scheibenbremsen herzustellen.

### Bezugszeichenliste

- 1, 1': Schwimmsattel-Teilbelag-Scheibenbremse
- 2, 2', 2'': sattelförmiges Gehäuse
- 3, 3', 3'': Bremsträger
- 4, 4': Bremsscheibe
- 10, 10': Bremsbelag
- 11, 11': Bremsbelag
- 12, 12': Trägerplatte
- 13, 13': Trägerplatte
- 14, 14': Kolben
- 15, 15': Zylinder
- 100: Entlüftungsbohrung
- 130: Bremsbelag-Trägerplatte
- 131: Schulter
- 132: Schräge
- 133: Aushebezahn
- 200: Gehäusebrücke
- 201: Nut
- 202: Anlagefläche

## Patentansprüche

1. Verfahren zum Herstellen eines Gehäuses (2, 2', 2'') für eine Schwimmsattel-Teilbelag-Scheibenbremse (1, 1') mit einer Gehäusebrücke (200), einer hydraulischen Betätigungseinheit, die einen Zylinder (15, 15') und einen Kolben (14, 14') umfasst, einer Nut (201) und einer Anlagefläche (202) für einen mittels der hydraulischen Betätigungseinheit via die Gehäusebrücke (200) indirekt gegen eine Bremsscheibe (4, 4') drückbaren Bremsbelag (11, 11'), **dadurch gekennzeichnet, dass** die Nut (201) und die Anlagefläche (202) auf der dem Kolben (14, 14') abgewandten Faustseite des Gehäuses (2, 2', 2'') durch Bearbeitung des Gehäuses (2, 2', 2'') ausschließlich konzentrisch zur Achse des Zylinders (15, 15') nur mittels Dreh- und/oder Bohroperationen ausgebildet werden.

2. Verfahren nach Anspruch 1, **dadurch gekennzeichnet, dass** die Nut (201) zum mittigen Abstützen des Gehäuses (2, 2', 2'') auf einer Trägerplatte (13, 13', 130) des Bremsbelags (11, 11') und die Anlagefläche (202) des Gehäuses (2, 2', 2'') für den Bremsbelag (11, 11') auf der Faustseite in einem Bearbeitungsgang erzeugt werden.

3. Verfahren nach Anspruch 1 oder 2, **dadurch gekennzeichnet, dass** die Anlagefläche (202) auf der Faustseite in im wesentlichen der gleichen Größe wie die auf der Seite des Kolbens (14, 14') hergestellt wird.

4. Verfahren nach einem der vorangehenden Ansprüche, **dadurch gekennzeichnet, dass** in das Gehäuse (2') parallel zur Achse des Zylinders eine Entlüftungsbohrung (100) und ein Schlauchanschluß eingearbeitet werden.

5. Schwimmsattel-Teilbelag-Scheibenbremse mit einem nach einem der vorangehenden Ansprüche hergestellten Gehäuse und einem Bremsträger (3, 3', 3'').

6. Schwimmsattel-Teilbelag-Scheibenbremse nach Anspruch 5, **gekennzeichnet durch** eine Bremsbelag-Trägerplatte (130), die einseitig mit einer Schulter (131) und einem mit der Schulter (131) über eine Schräge (132) verbundenen Aushebezahn (133) zur Aufnahme eines Endes eines Bremsträgers (3'') zwischen der Schulter (131) und dem Aushebezahn (133) ausgeformt ist, so daß bei Bewegung der Bremsbelag-Trägerplatte (130) relativ zum feststehenden Bremsträger (3'') ein Gleiten entlang der Schräge (132) von der eine erste Anlagefläche für den Bremsträger (3'') darbietenden Schulter (131) zu dem eine zweite Anlagefläche für den Bremsträger (3'') darbietenden Aushebezahn (133) stattfindet.

## Claims

1. Method of manufacturing a housing (2, 2', 2'') for a floating-caliper spot-type disc brake (1, 1') with a housing bridge (200), a hydraulic actuating unit which comprises a cylinder (15, 15') and a piston 14, 14'), a groove (201), and an abutment surface (202 for a brake pad (11, 11') that can be pressed indirectly by means of the hydraulic actuating unit, via the housing bridge (200), against a brake disc (4, 4'),
**characterized in that** on the fist side of the housing (2, 2', 2'') remote from the piston (14, 14'), the groove (201) and the abutment surface (202), by way of machining the housing (2, 2', 2''), are designed exclusively concentrically relative to the axis of the cylinder (15, 15') only by means of turning and/or drilling operations.

2. Method as claimed in claim 1,
**characterized in that** the groove (201) for centrically supporting the housing (2, 2', 2'') on a carrier plate (13, 13', 130) of the brake pad (11, 11'), and the abutment surface (202) of the housing (2, 2', 2'') for the brake pad (11, 11') on the fist side, are produced in one machining operation.

3. Method as claimed in claim 1 or 2,
**characterized in that** the abutment surface (202) on the fist side is made in essentially the same size as the one on the side of the piston (14, 14').

4. Method as claimed in any one of the preceding claims,
**characterized in that** a bleeding bore (100) and a hose connection are machined into the housing (2') in parallel to the axis of the cylinder.

5. Floating-caliper spot-type disc brake including a housing manufactured as claimed in any one of the preceding claims and a brake support member (3, 3', 3'').

6. Floating-caliper spot-type disc brake as claimed in claim 5,
**characterized by** a brake pad carrier plate (130) which is shaped on one side with a shoulder (131) and a lifting tooth (133) connected to the shoulder (131) by way of a slope (132) for the accommodation of an end of a brake support member (3'') between the shoulder (131) and the lifting tooth (133) so that, upon movement of the brake pad carrier plate (130) relative to the stationary brake support member (3''), there occurs a sliding along the slope (132) from the shoulder (131) providing one first abutment surface for the brake support member (3'') to the lifting tooth (133) providing a second abutment surface for the brake support member (3'').

## Revendications

1. Procédé de fabrication d'un boîtier (2, 2', 2") pour un frein à disque flottant à garniture partielle (1, 1') comportant un pont de boîtier (200), une unité d'actionnement hydraulique qui comprend un cylindre (15, 15') et un piston (14, 14'), comportant une rainure (201) et une surface de contact (202) pour une garniture de frein (11, 11') pouvant être pressée au moyen de l'unité d'actionnement hydraulique indirectement, via le pont de boîtier (200), contre un disque de frein (4, 4'), **caractérisé en ce que** la rainure (201) et la surface de contact (202) sont réalisées sur le côté du boîtier (2, 2', 2") tourné à l'opposé du piston (14, 14'), par usinage du boîtier (2, 2', 2") exclusivement concentriquement à l'axe du cylindre (15, 15'), uniquement par des opérations de tournage et/ou d'alésage.

2. Procédé selon la revendication 1, **caractérisé en ce que** la rainure (201), pour l'appui central du boîtier (2, 2', 2") sur une plaque de support (13, 13', 130) de la garniture de frein (11, 11'), et la surface de contact (202) du boîtier (2, 2', 2") pour la garniture de frein (11, 11') sur le côté, sont produites en une passe d'usinage.

3. Procédé selon la revendication 1 ou 2, **caractérisé en ce que** la surface (202) sur le côté est réalisée sensiblement de la même taille que celle sur le côté du piston (14, 14').

4. Procédé selon l'une des revendications précédentes, **caractérisé en ce que** dans le boîtier (2'), parallèlement à l'axe du cylindre, est pratiqué un perçage de purge d'air (100) et un raccord pour tuyau.

5. Frein à disque flottant à garniture partielle avec un boîtier réalisé selon l'une des revendications précédentes et un porte-frein (3, 3', 3").

6. Frein à disque flottant à garniture partielle selon la revendication 5, **caractérisé par** une plaque de support de garniture de frein (130) qui est formée d'un côté avec un épaulement (131) et une dent de soulèvement (133), reliée à l'épaulement (131) par une surface oblique (132), pour recevoir une extrémité d'un porte-frein (3") entre l'épaulement (131) et la dent de soulèvement (133), ce qui fait que lors du mouvement de la plaque de support de garniture de frein (130) par rapport au porte-frein (3") fixe, il se produit un glissement le long de la surface oblique (132) d'une première surface de contact pour l'épaulement (131) présentant le porte-frein (3") vers une deuxième surface de glissement pour la dent de soulèvement (133) présentant le porte-frein (3").
